# EUROPEAN PATENT SPECIFICATION

(11) **EP 4 354 726 B1**
(45) Date of publication and mention of the grant of the patent: **28.10.2026**
(21) Application number: 22921014.1
(22) Date of filing: 23.12.2022
(51) Int. Cl.: H02P 3/22, A63H 17/26, A63H 29/00, H02P 6/24, H02P 21/00, H02P 21/36

(54) **LINEAR BRAKE CONTROL METHOD AND APPARATUS APPLIED TO COMPETITION-LEVEL REMOTE-CONTROLLED MODEL VEHICLE**
VERFAHREN UND VORRICHTUNG ZUR STEUERUNG VON LINEARBREMSEN FERNGESTEUERTER MODELLRENNWAGEN
PROCÉDÉ ET APPAREIL DE COMMANDE DE FREIN LINÉAIRE APPLIQUÉS À UN MODÈLE RÉDUIT DE VÉHICULE TÉLÉCOMMANDÉ DE NIVEAU COMPÉTITION

(30) Priority: 22.08.2022 CN 202211003903
(43) Date of publication of application: 17.04.2024
(73) Proprietor: Shenzhen Hobbywing Technology Co., Ltd., Shenzhen, Guangdong 518100 (CN)
(72) Inventor: CHEN, Dewel, Shenzhen, Guangdong 518100 (CN); LIU, Youhui, Shenzhen, Guangdong 518100 (CN); LI, Diyu, Shenzhen, Guangdong 518100 (CN)
(74) Representative: Santarelli
(86) International application number: PCT/CN2022/141209
(87) International publication number: WO 2024/040823

(56) References cited:
- EP-A1- 2 687 396
- EP-A1- 3 257 352
- CN-A- 105 391 364
- CN-A- 108 233 809
- CN-A- 110 875 709
- CN-A- 113 193 795
- CN-A- 114 499 308
- CN-A- 114 696 702
- CN-A- 115 085 610
- JP-A- 2002 095 105
- JP-A- 2008 137 550
- JP-A- 2010 283 951

## Description

The present application claims priority to Chinese Patent Application No.202211003903.6, filed with the Chinese Patent Office on August 22, 2022, titled_"Method and Device for Controlling Linear Brakes of Remote-controlled Model Racing Cars", the entire contents of which are incorporated herein by reference.

### Technical Field

The invention pertains to the field of remote-controlled model racing cars, in particular to a method and a device for controlling the linear brakes of remote-controlled model racing cars.

### Background of the Invention

The field of remote-controlled model racing cars is demanding on the control performance of model cars, as it is crucial to the results of any competition. At present, a vast majority of remote-controlled model racing cars available in the market are powered by brushless motors, and their motors are controlled using a square wave drive (six-step commutation). This achieves the manipulation of the remote-control model car. The invention only aims at the working conditions of the brakes and this topic is elaborated on here. Under the square wave drive, the three-phase lower bridge is generally subject to the concurrent PWM modulation to form a circuit; the BEMF is used to generate braking current for braking effect (hereinafter referred to as conventional braking). The driver may adjust the magnitude of the equivalent BEMF by controlling the duty cycle of a three-phase lower bridge PWM through the remote-controller. Doing so controls the magnitude of braking current. As the magnitude of the BEMF is also related to the motor speed, the magnitude of the braking current is jointly determined by the duty cycle of the three-phase lower tube PWM control and the motor speed. This does not allow the driver to accurately control the braking force, thus seriously affecting the maneuverability of model cars under braking conditions.

Moreover, the prior art does not enable the linear control of remote-controlled model racing cars through remote-controls. As a result, this causes the drivers (model car operators) to fail to control the speed of remote-controlled cars under braking conditions, which affects the maneuverability of model cars when braking.

Document EP 2 687 396 A1 discloses a motor drive device, including a circuit (e.g., an inverter) with a connection configuration that is switchable among: (a) a drive operative connection configuration that allows a motor unit to be driven with power supplied from a battery unit; (b) a regenerative braking connection configuration; and (c) a short-circuit connection configuration that causes motor coils of the motor unit to short-circuit to create a braking force. The motor drive device also includes a short-circuit current controller configured to control a short-circuit current that flows when the connection configuration of the circuit is (c) the short-circuit connection configuration. The motor drive device also includes a regenerative braking and short-circuit braking switching controller that may cause switching from (b) the regenerative braking connection configuration to (c) the short-circuit connection configuration, or vise versa, in dependency of whether the batteyr is fully charged.

Document CN 113 193 795 A relates to the field of synchronous rectification, and in particular to an intelligent synchronous rectification system of an electronic speed governor and a control method thereof, applicable in electric remote control model cars, airplane models, and marine models. The system comprises: a Hall sensor which is used for obtaining the position information of a brushless DC motor rotor; a second control module which is used for receiving the rotor position information sent by the Hall sensor and generating a synchronous rectification opening and closing signal, and is also used for generating a follow current ending signal; a three-phase inverter which is used for driving the brushless direct current motor to move; a first control module which is used for receiving the synchronous rectification opening and closing signal or the follow current ending signal sent by the second control module and controlling the three-phase inverter according to the synchronous rectification opening and closing signal or the follow current ending signal; a follow current detection module which is used for detecting three-phase current in the three-phase inverter and sending a signal to the second control module; and a power supply module which is used for supplying power to the three-phase inverter, the first control module, the second control module, the Hall sensor and the follow current detection module. The system has the effects of reducing the rectification loss and the operation smoothness at the same time.

EP 3 257 352 A1 discloses an apparatus for controlling operation of a walk-behind electric lawn mower equipped with an electric motor, a blade cutter connected to the electric motor and a rechargeable battery mounted connected to the electric motor and a motor driver circuit . In the apparatus, when an instruction to stop the electric motor is inputted, the operation of the motor driver circuit is controlled to output regenerative electric current from three-phase coils of the electric motor. At that time, it is determined whether a rotational speed of the electric motor is equal to or less than a switching rotational speed and when it is, the motor driver circuit is controlled to switch from the regenerative braking to short-circuit braking that short-circuits the three-phase coils of the electric motor.

### Summary of the Invention

In view of this, the embodiment of the invention aims to switch the driving mode from a square wave drive to a magnetic Foc drive when the remote-controller issues a braking command. The braking current is directly controlled using the Foc algorithm. Since the current is proportional to the torque, the indirect control of the brake torque is realized, so that the magnitude of the braking force is only related to the braking command issued by the remote-controller. This avoids the influence of speed on braking force as occurs under a conventional braking algorithm, and greatly improves the maneuverability of the car under braking conditions.

The first aspect of the invention provides a method for controlling the linear brakes of remote-controlled model racing cars according claim 1, comprising that:
S1. the user sends the remote-control command to the motor control module of the model car through a remote-controller; the remote-control command includes a braking command; a braking command includes the current throttle value;
S2. when a braking command is sent by the remote-controller, the motor control module selects appropriate braking algorithm according to the speed of the current brushless motor; if the speed of the current brushless motor is greater than the first threshold, the Foc brake control algorithm selects the braking reaction according to the received remote-control command and controls the braking current of the brushless motor; if the current speed of the brushless motor is less than the first threshold, the braking algorithm is switched based on PWM control according to the received remote-control command and the braking current of the brushless motor is controlled.
S3. the brushless motor controls the braking torque of the braking transmission system according to the braking current.

Furthermore, in the S2, if the speed of the current brushless motor is greater than the first threshold, the magnetic Foc brake control algorithm is selected according to the received remote-control command and controls the braking current of the brushless motor. It is comprised of following steps:
S201. convert the current throttle value in the braking command into the reference braking current *Iq,* and input it to the current controller;
S202. the current controller may determine the voltage required to maintain the reference braking current, and output voltages *Vd* and *Vq;*
S203. based on the rotor angle information provided by the HALL sensor, derive *Valpha* and *Vbeta* in the stator coordinate system from inverse PARK transformation of the voltages *Vd* and *Vq;*
S204. generate the control signal of the inverter and realize the control of brushless motors after *Valpha* and *Vbeta* are input to SVPWM.

Furthermore, in the S2, if the speed of the current brushless motor is less than or equal to the first threshold, the braking current of the brushless motor is controlled by switching to a braking algorithm based on the PWM control according to the received remote-control command, including:
S211. convert the current throttle value in the braking command into the duty cycle signal of the three lower bridges and input it to the inverter;
S212. when the motor has a rotating speed, the permanent magnet of the motor will cut the wire and generate a BEMF in the three phase lines. At this time, the three lower bridges will be connected to form a loop, and the BEMF will generate the braking current in the loop to achieve the braking effect.

Furthermore, in S1, the remote-control command also includes a driving command; the driving command includes the current throttle value;
the S2 also includes steps of the motor control module controlling the output voltage of the inverter and the driving speed of the motor by adjusting the duty cycle of the PWM module according to the current throttle value when the remote-control command is a driving command.

In addition, the second aspect of the invention also discloses a device for controlling the linear brakes of remote-controlled model racing cars according to claim 4. The device consists of a remote-control, a motor control module, a brushless motor, and a transmission system;
the remote-controller may receive the remote-control command selected by the user according to the condition of the model cars, and send the remote-control command to the motor control module of the model cars; the remote-control command includes a braking command; the braking command includes the current throttle value;
the motor control module may control the motor by receiving a remote-controlled command and selecting appropriate control algorithms; when a braking command is sent by the remote-controller, the appropriate braking algorithm is selected according to the speed of the current brushless motor; if the speed of the current brushless motor is greater than the first threshold, the braking current of the brushless motor is controlled by selecting the Foc brake control algorithm according to the received remote-controlled command; if the speed of the current brushless motor is less than or equal to the first threshold, the braking current of the brushless motor is controlled by switching to the braking algorithm based on the PWM control according to the received remote-control command;
the transmission system may receive and control the braking torque of the brushless motor on the transmission system according to the braking current.

Furthermore, the motor control module also includes a first brake control module. The first brake control module may select the Foc brake control algorithm according to the received remote-control command and the braking current of the brushless motor is controlled if the speed of the current brushless motor is greater than the first threshold; the first brake control module is also used under following conditions:
the current throttle value in the braking command is converted into the reference braking current *Iq* and input into the current controller; the current controller determines the voltage required to maintain the reference value of the braking current, and outputs the voltages *Vd* and *Vq;* based on the rotor angle information provided by the HALL sensor, the *Valpha* and *Vbeta* in the stator coordinate system are derived from inverse PARK transformation of the voltages *Vd* and *Vq; Valpha* and *Vbeta* are input to the SVPWM to generate the control signal of the inverter and to control the brushless motor.

Furthermore, the motor control module also includes a second brake control module. The second brake control module may control the braking current of the brushless motor when the speed of the current brushless motor is less than or equal to the first threshold value by switching to the brake algorithm based on PWM control according to the received remote-control command;
the second brake control module is also used under following conditions: The current throttle value in the braking command is converted into the duty cycle signal of the three lower bridges and input it to the inverter; when the motor has a rotating speed, the permanent magnet of the motor will cut the wire and generate a BEMF in the three phase lines. At this time, the three lower bridges will be connected to form a loop, and the BEMF will generate the braking current in the loop to achieve the braking effect.

In addition, the third aspect of the invention provides a linear brake control system which includes the aforesaid device for controlling the linear brakes of remote-controlled model racing cars, and the steps for implementing the aforesaid method for controlling the linear brakes of remote-controlled model racing cars.

In addition, the fourth aspect of the present invention provides a computer-readable storage medium according to claim 7, in which at least one instruction is stored; such instruction is loaded and executed by a processor to realize the steps of the aforesaid method for controlling the linear brakes of remote-controlled model racing cars.

According to some embodiments of the present invention, the user sends a remote-control command to a motor control module of the model car through a remote-controller; the remote-control command includes a braking command; the braking command includes the current throttle value; when a braking command is sent by the remote-controller, the motor control module selects the appropriate braking algorithm according to the speed of the current brushless motor; if the speed of the current brushless motor is greater than the first threshold, the Foc brake control algorithm is selected according to the received remote-control command and the braking current of the brushless motor is controlled; if the speed of the current brushless motor is less than or equal to the first threshold, the braking algorithm is switched based on the PWM control according to the received remote-control command and the braking current of the brushless motor is controlled; the brushless motor controls the braking torque of the braking transmission system according to the braking current. When a braking command is issued through the remote-controller, the drive mode is switched from square wave drive to magnetic FOC drive, and the FOC control algorithm is used to directly control the braking current. Since the current is proportional to the torque, the indirect control of the brake torque is realized, so that the brake force is only related to the braking command issued by the driver's remote-controller. Doing so avoids the impact of speed on the brake force under the conventional brake algorithm, and greatly improves the maneuverability of the car under braking conditions.

### Brief description of the Drawings

In order to more explicitly explain the technical solution of the embodiments of the invention, the accompanied drawings required in the embodiments will be briefly described. It should be understood that the following drawings only show some embodiments of the invention, and shall not be construed as restrictions to the scope. It is apparent to those ordinary skills in the art that, they may derive other relevant drawings based on these drawings without creative efforts.
Figure 1 is a flow diagram of the method for controlling the linear brakes of remote-controlled model racing cars disclosed in the embodiment 1 of the present invention;
Figure 2 is the overall block diagram of the Foc brake control algorithm disclosed in embodiment 1 of the present invention;
Figure 3 is a conventional braking algorithm framework disclosed in the embodiment 1 of the present invention;
Figure 4 is a basic block diagram of motor control using square wave drive algorithm in the driving state disclosed in the embodiment 1 of the invention;
Figure 5 is an overall control block diagram disclosed in the embodiment 1 of the present invention;
Figure 6 is a structural diagram of the device for controlling the linear brakes of remote-controlled model racing cars as disclosed in the embodiment 2.

### Detailed Description of Embodiments

The exemplary embodiments will now be elaborated on in more detail with reference to the accompanying drawings. However, the exemplary embodiments may be implemented in a variety of forms, and shall not be construed as a restriction to the embodiments set forth herein; on the contrary, such embodiments ensure a more comprehensive and complete application and thoroughly convey the ideas of the exemplary embodiments to those skilled in the art.

Furthermore, the described characteristics, structures or features may be combined in one or more embodiments in any suitable manner. Many specific details are provided below to offer a full knowledge of the embodiments of the present application. However, those skilled in the art will realize that the technical solution of the application may be practiced without one or more specific details, or other methods, components, devices, steps, etc. may be employed. In other cases, well-known methods, apparatuses, implementations or operations are not shown or described in detail to avoid blurring aspects of the present application.

The block diagram in the drawings only illustrates a functional entity and does not necessarily correspond to a physically independent entity. Namely, such functional entities may be implemented in software, or in one or more hardware modules or integrated circuits, or in different networks and/or processor devices and/or microcontroller devices.

The flow chart shown in the drawings is only an exemplary description, and does not necessarily include all contents and operations/steps, nor shall it be executed in the described order. For instance, some operations/steps may be decomposed, while some operations/steps may be entirely or partially combined. Accordingly, the actual execution order may change depending on the actual situation.

It shall be noted that: The "multiple" mentioned herein refers to two or more.

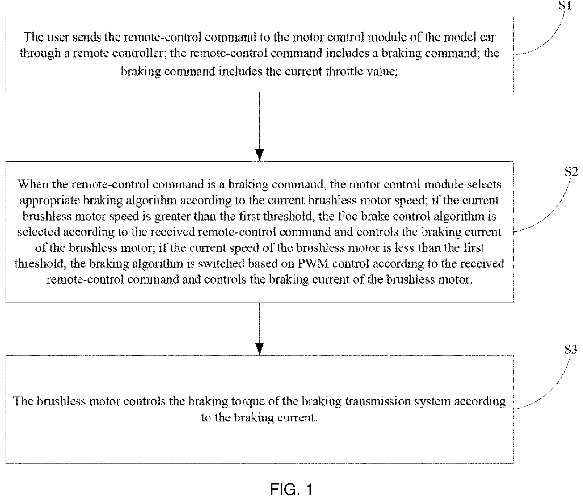

The implementation details of the technical solution of the embodiment of the application are elaborated below:
Please refer to Figure 1, a flow diagram of a method for controlling the linear brakes of remote-controlled model racing cars as disclosed in the embodiment of the invention. As shown in Figure 1, a method for controlling the linear brakes of remote-controlled model racing cars is disclosed in the comprised embodiment of the invention:
S1. The user sends a remote-control command to the motor control module of the model car through a remote-controller; the remote-control command includes a braking command; the braking command includes the current throttle value.

Specifically in this embodiment, the driver selects different remote-control commands to control the model car depending on the vehicle conditions. When the driver wants the car to enter the driving state, the driver sends the driving command (including the throttle size) through the remote-controller. The motor control module may adjust the duty cycle of the PWM module according to the throttle size and control the output voltage of the inverter, so as to achieve the effect of controlling the rotation speed of motors. When braking is required, the driver sends a braking command (including the current throttle value) through the remote-controller. The braking command includes the current throttle value; at this time, the control algorithm is switched to the Foc control module which is used to precisely control the braking current of the brushless motor, thus realizing the linear braking control of the remote-controlled cars.

S2. When a braking command is sent by the remote-controller, the motor control module selects an appropriate braking algorithm according to the speed of the current brushless motor; if the speed of the current brushless motor is greater than the first threshold, the Foc brake control algorithm is selected according to the received remote-control command and controls the braking current of the brushless motor; if the current speed of the brushless motor is less than the first threshold, switch to the braking algorithm based on PWM control according to the received remote-control command and controls the braking current of the brushless motor.

S3. The brushless motor controls the braking torque of the braking transmission system according to the braking current.

Further in S2, if the speed of the current brushless motor is greater than the first threshold, the braking current of the brushless motor is controlled by selecting the Foc brake control algorithm according to the received remote-control command to control braking. It includes following steps. In S201, the current throttle value is converted in the braking command into the reference braking current *Iq,* and input it to the current controller; in S202, the current controller determines the voltage required to maintain the reference braking current, and to output voltages *Vd* and *Vq;* in S203, based on the rotor angle information provided by the HALL sensor, the *Valpha* and *Vbeta* in the stator coordinate system are derived from the inverse PARK transformation of voltages *Vd* and *Vq;* in S204, Valpha and *Vbeta* are input into *SVPWM* and generate the control signal of inverter to realize the control of brushless motor.

Specifically in this embodiment, the speed information of the brushless DC motor is generally sensed using the HALL sensor. Because the HALL sensor has low accuracy, and excessively low motor speeds may affect the motor control accuracy of the Foc algorithm, it is possible to set s to a small value of the first threshold, such as a speed close to 0. Doing so may control the braking current of the brushless motor according to the received remote-control command if the speed of the current brushless motor is greater than the first threshold during the brake control; if the speed of the current brushless motor is less than or equal to the first threshold, the braking algorithm based on the PWM control is switched and the braking current of the brushless motor is controlled according to the received remote-control command.

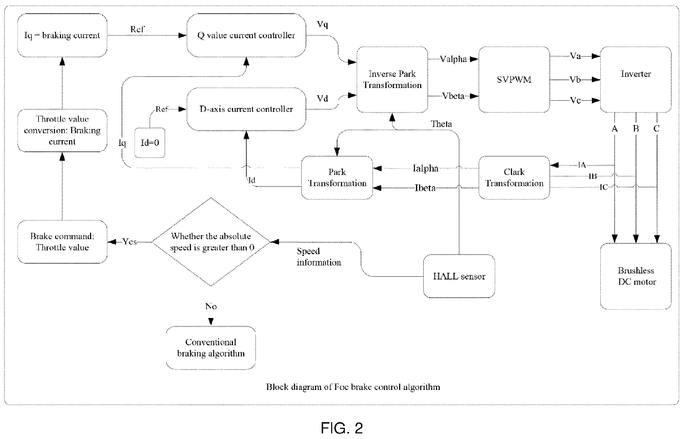

Furthermore, Figure 2 shows an overall block diagram of the Foc brake control algorithm in this embodiment. First, the three-phase current signals, *IA, IB,* and *IC,* are collected through the current sensor; the *Ialpha* and *Ibeta* currents in the stator coordinate system are derived from the Clark transformation of the three-phase current signal; the *Id* and *Iq* currents are derived from the Park transformation of the *Ialpha* and *Ibeta* currents using the rotor angle information provided by the HALL sensor. The *Id* current is the direct axis current without torque, so the D axis current controller is used here to control the Id current to OA to reduce unnecessary energy loss caused by stator heating. The current *Iq* is the torque current (generating torque), which is proportional to the motor torque. The motor torque may be accurately controlled by controlling the magnitude of the current *Iq.* Based on the previously obtained correlation coefficient, the throttle value in the remote-control command is converted into the reference current *Iq,* and the *Iq* current is controlled to the *Iq* reference current value using the Q-axis current controller. This allows the indirect control of the throttle over the motor torque. The linear control of the motor brake is realized.

It should be noted that in this embodiment, when the Foc braking algorithm is executed, the throttle value is converted into the reference braking current *Iq* and input into the current controller. The current controller may calculate the voltage required to maintain the reference current. The *Valpha* and *Vbeta* in the stator coordinate system are derived from the inverse PARK transformation of *Vd* and *Vq,* outputs of the two current controllers using the rotor angle information provided by the HALL sensor. Then *Valpha* and *Vbeta* enter the SVPWM (space vector modulation technology) module and generate the control signal of the inverter to achieve the control of the motor.

Furthermore, in S2, if the speed of the current brushless motor is less than or equal to the first threshold, the braking current of the brushless motor is controlled by switching to a braking algorithm based on the PWM control according to the received remote-control command, including: S211. The current throttle value in the braking command is converted into the duty cycle signal of the three lower bridges and this is input into the inverter; S212. When the motor has a rotating speed, the permanent magnet of the motor will cut the wire and generate the BEMF in the three phase lines. At this time, the three lower bridges will be connected to form a loop, and the BEMF will generate the braking current in the loop to achieve the braking effect.

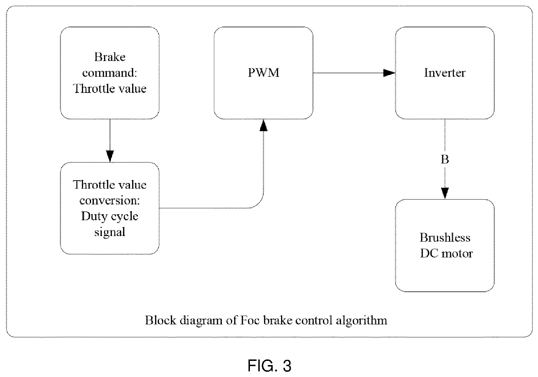

Specifically in this embodiment, the HALL sensor has low accuracy. An excessively slow motor speed may affect the motor control accuracy of the Foc algorithm. When the speed of the brushless motor is too low, it should switch back to the conventional braking algorithm. If the speed of the current brushless motor is less than or equal to the first threshold, it is possible to set *s* to a small value of the first threshold, such as a speed close to 0. Namely, when the brushless motor speed is low and is close to stopped, the braking current of the brushless motor will be controlled by switching to the brake algorithm based on PWM control (i.e. conventional brake algorithm) according to the received remote-control command. Specifically, Figure 3 is the block diagram of the conventional braking algorithm in this embodiment. The throttle value signal of the braking command is converted into the duty cycle signal of the three-way lower bridge and input to the inverter. When the motor has a rotating speed, the motor permanent magnet will cut the wire and generate a BEMF in the three-way phase line. At this time, if the three-way lower bridge is connected to form a loop, the BEMF will generate braking current in the loop, thus achieving the braking effect. The duty cycle is used to control the conduction time of the lower bridges. When the reverse electric amplitude is the same (the speed is the same), the larger the duty cycle is, the longer the braking duration is, and the stronger the braking effect will be. Accordingly, brake control is achieved. Because the car is braked by the brake force generated by the BEMF using the algorithm, the BEMF will change as the speed varies. This will not cause a constant correspondence between the braking force and the throttle value, thus affecting the maneuverability of the brakes.

Furthermore, in the S1, the remote-control command also includes a driving command; the driving command includes the current throttle value; the S2 also includes steps of the motor control module controlling the output voltage of the inverter and the driving speed of the motor by adjusting the duty cycle of the PWM module according to the current throttle value when the remote-control command is a driving command.

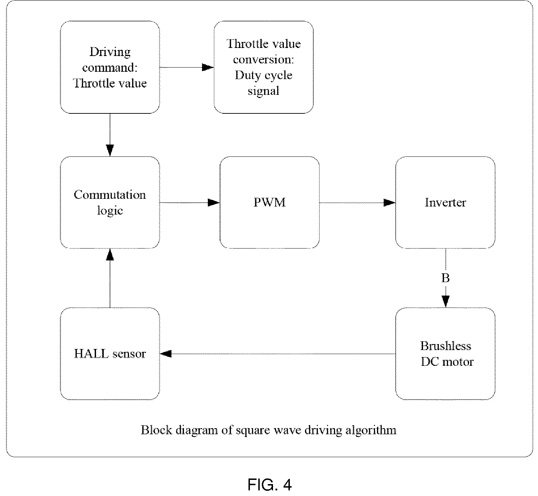

Specifically, Figure 4 of this embodiment is a basic block diagram that shows the control of motors in the driving state using the square wave drive algorithm. Wherein, the digital signal output by the HALL sensor is sent to the commutation logic module and appropriate tube-opening states are generated and converted into the duty cycle signal based on the throttle value. Such values may enter the inverter, and the motor is subject to six step commutation control in combination with PWM technology.

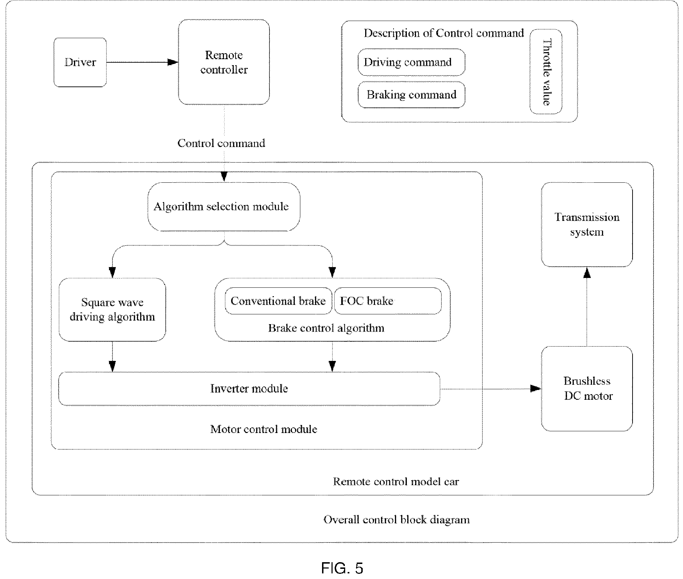

In summary, the overall control block diagram of this embodiment is shown in Figure 5. The motor control module selects the appropriate control algorithm according to the control command given by the driver and controls the motor, so as to achieve the effect of controlling the remote-controlled model car. After receiving a braking command, the motor control module selects an appropriate braking algorithm according to the motor speed, among which, a square wave driving algorithm or braking control algorithm may be chosen. When the control command is the control command for normal driving, the square wave drive algorithm is started to perform speed control, and the control command is the braking command. Then the speed of the brushless motor is obtained, and the appropriate braking process is controlled by selecting and switching the brake algorithm according to the speed. When the motor speed is not 0, it will switch to the Foc braking algorithm to slow the motor through braking. When the speed is close to 0, it will switch back to the conventional braking algorithm (the low HALL sensor accuracy low, and the excessively low motor speed will affect the motor control accuracy of the Foc algorithm. At this time, it will switch back to the conventional braking algorithm). Since the current is proportional to the torque, indirect control of the braking torque is achieved. The magnitude of the braking force is only related to the braking command issued by the driver's remote-controller. This avoids the impact of rotating speed on the brake force under the conventional braking algorithm, and greatly improves the maneuverability of cars under braking conditions.

### Embodiment 2

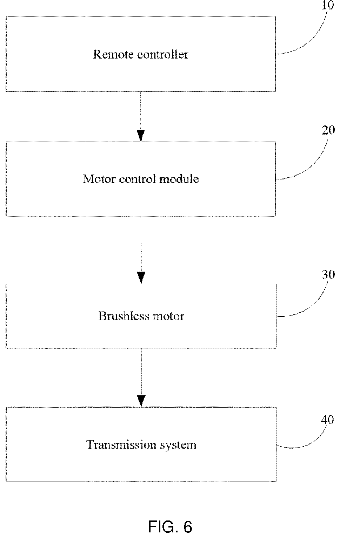

In addition, as shown in Figure 6, this embodiment proposes a structural diagram of a device for controlling the linear brakes of remote-controlled model racing cars. The device includes a remote-controller 10, a motor control module 20, a brushless motor 30, and a transmission system 40.

The remote-controller (10) may receive the remote-control command selected by the user according to the condition of the model cars, and send the remote-control command to the motor control module of the model cars; the remote-control command includes a braking command; the braking command includes the current throttle value;

The motor control module 20 may control the motor by receiving the remote-control command and selecting appropriate control algorithms; when a braking command is sent by the remote-controller, the appropriate braking algorithm is selected according to the current brushless motor 30 speed; if the current brushless motor 30 speed is greater than the first threshold, the braking current of the brushless motor 30 is controlled by selecting the Foc brake control algorithm according to the received remote-control command; if the current brushless motor 30 speed is less than or equal to the first threshold, the braking current of the brushless motor 30 is controlled by switching to the PWM based braking algorithm according to the received remote-control command;

The transmission system 40 may receive and control the braking torque of the brushless motor 30 on the transmission system 40 according to the braking current.

Furthermore, the motor control module 20 also includes a first brake control module. The first brake control module may select the Foc brake control algorithm according to the received remote-control command and the braking current of the brushless motor is controlled if the speed of the current brushless motor is greater than the first threshold; the first brake control module is also used under following conditions:
the current throttle value in the braking command is converted into the reference braking current *Iq* and this is input into the current controller; the current controller determines the voltage required to maintain the reference value of the braking current, and outputs the voltages *Vd* and *Vq;* based on the rotor angle information provided by the HALL sensor, the *Valpha* and *Vbeta* in the stator coordinate system are derived from inverse PARK transformation of the voltages *Vd* and *Vq;* Valpha and Vbeta are input to the SVPWM to generate the control signal of the inverter and to control the brushless motor.

Furthermore, the motor control module 20 also includes a second brake control module. The second brake control module is used to control the braking current of the brushless motor 30 when the current brushless motor 30 speed is less than or equal to the first threshold value by switching to the brake algorithm based on PWM control according to the received remote-control command.

The second brake control module is also used under following conditions: Convert the current throttle value in the braking command into the duty cycle signal of the three lower bridges and input it to the inverter; when the brushless motor 30 has a rotating speed, the permanent magnet of the brushless motor 30will cut the wire and generate a BEMF in the three phase lines. At this time, the three lower bridges will be connected to form a loop, and the BEMF will generate the braking current in the loop to achieve the braking effect.

Moreover, this embodiment also provides a linear brake control system which includes the aforesaid device for controlling the linear brakes of remote-controlled model racing cars, and for implementing steps of the aforesaid method for controlling the linear brakes of remote-controlled model racing cars.

In addition, this embodiment also provides a computer-readable storage medium in which at least one instruction is stored; such instruction is loaded and executed by a processor to realize the steps of the aforesaid method for controlling the linear brakes of remote-controlled model racing cars.

It is apparent to those skilled in the art that the units and algorithm steps of each example described in conjunction with the embodiments disclosed herein can be implemented in electronic hardware, computer software, or in both. In order to clearly explain the interchangeability of hardware and software, the composition and steps of each example have been generally described in the above description according to their functions. Whether these functions are implemented in hardware or software depends on the specific application and design constraints of the technical solution. Professional technicians may use different methods to realize the described functions for each specific application, but such implementation shall not be construed beyond the scope of the invention.

In several embodiments provided in the present application, it should be understood that the disclosed device and method can be implemented in other ways. For example, the embodiments of the aforesaid device are only schematic. For example, the units are only divided by logical functions, or by other method during the actual implementation. For example, multiple units or components can be combined or integrated into another system, or some features can be ignored or be skipped. In addition, the mutual coupling or direct coupling or communication connection shown or discussed may be indirect coupling or communication linkage through some interfaces, devices or units, or in the electrical, mechanical connection or in other forms of connection.

The unit described as a separate component may or may not be physically separated. As a unit, those skilled in the art can realize that the unit and algorithm steps described in combination with the embodiments disclosed herein can be implemented in electronic hardware, computer software, or in combination of any two means. In order to clearly explain the interchangeability of hardware and software, in the above description, the composition and steps of each example have been generally described in terms of function. Whether these functions are implemented in hardware or software depends on the specific application and design constraints of the technical solution. Professional technicians may use different methods to realize the described functions for each specific application, but such implementation shall not be construed beyond the scope of the invention.

In addition, each functional unit in each embodiment of the invention may be integrated in a processing unit, or each physical unit exist independently, or two or more units may be integrated in a unit. The aforesaid integrated units can be realized in the form of hardware or software functional units.

If the integrated unit is implemented in the form of a software functional unit and is sold or used as an independent product, it may be stored in a computer-readable storage medium. Based on this understanding, the portion of the technical solution of the invention that contributes to the prior art in essence, or the whole or part of the technical solution may be embodied in the form of a software product. The computer software product is saved in a storage medium. A number of instructions are included to enable a computer device (which may be a personal computer, a server, or a grid device, etc.) to perform all or part of the steps of the method described in various embodiments of the present invention. The aforementioned storage media include USB flash disk, mobile hard disk, Read Only Memory (ROM), Random Access Memory (RAM), magnetic disc or optical disc and other media that can store program codes.

The foregoing specific embodiments further describe the purpose, technical solution and beneficial effects of the invention. It should be understood that the foregoing is the only specific embodiments of the invention and does not intend to limit the scope of protection of the invention. Any modification, equivalent substitution, improvement, etc. made within the spirit and principles of the invention should be included in the scope of protection of the invention.

## Claims

1. A method for controlling linear brakes of remote-controlled model racing cars, the method includes:
S1. the user sends the remote-control command to the motor control module of the model car through a remote controller; the remote-control command includes a braking command; the braking command includes the current throttle value;
S2. when a braking command is sent by the remote controller, the motor control module selects an appropriate braking algorithm according to the speed of the current brushless motor; if the speed of the current brushless motor is greater than the first threshold, the brake control algorithm selects the field-oriented control (Foc) according to the received remote-control command and the braking current of the brushless motor is controlled, thus realizing the linear braking control of the remote-controlled cars; if the current speed of the brushless motor is less than the first threshold, the braking algorithm will switch to the pulse width modulation (PWM) control according to the received remote-control command and the braking current of the brushless motor is controlled; the first threshold is close to 0;
S3. the brushless motor controls the braking torque of the braking transmission system according to the braking current;
in S2, if the speed of the current brushless motor is greater than the first threshold, the magnetic Foc brake control algorithm is selected according to the received remote-control command and controls the braking current of the brushless motor. It is comprised of following steps:
S201. convert the current throttle value in the braking command into the reference braking current *Iq,* and input it to the current controller;
S202. the current controller is configured to determine the voltage required to maintain the reference braking current, and output voltages *Vd* and *Vq;*
S203. based on the rotor angle information provided by the HALL sensor, derive *Valpha* and *Vbeta* in the stator coordinate system from an inverse PARK transformation of the voltages *Vd* and *Vq;*
S204. generate the control signal of the inverter and realize the control of brushless motors after *Valpha* and *Vbeta* are input to the space vector pulse width modulation (SVPWM).

2. The method for controlling the linear brakes of remote-controlled model racing cars according to claim 1 is **characterized in that** in the S2, if the speed of the current brushless motor is less than or equal to the first threshold, the braking current of the brushless motor is controlled by switching to a brake algorithm based on the PWM control according to the received remote-control command, including:
S211. convert the current throttle value in the braking command into the duty cycle signal of the three lower bridges and input it to the inverter;
S212. when the brushless motor has a rotating speed, the permanent magnet of the brushless motor will cut the wire and generate a back electro-motive force (BEMF) in the three phase lines.
At this time, the three lower bridges will be connected to form a loop, and the BEMF will generate the braking current in the loop to achieve the braking effect.

3. The method for controlling the linear brakes of remote-controlled model racing cars according to claim 1 is **characterized in that** in the S1, the remote-control command also includes a driving command; the driving command includes a current throttle value;
the S2 also includes steps of the motor control module controlling the output voltage of the inverter and the driving speed of the brushless motor by adjusting the duty cycle of the PWM module according to the current throttle value when the remote-control command is a driving command.

4. A device for controlling the linear brakes of remote-controlled model racing cars, the device comprising a remote controller (10), a motor control module (20), a brushless motor (30), and a transmission system (40);
the remote controller (10) is configured to receive the remote-control command selected by the user according to the condition of the model cars, and send the remote-control command to the motor control module of the model cars; the remote-control command includes a braking command; a braking command includes the current throttle value;
the motor control module (20) is configured to control the motor by receiving a remote-control command and selecting appropriate control algorithms; when a braking command is sent by the remote controller, the appropriate braking algorithm is selected according to the speed of the current brushless motor (30); if the speed of the current brushless motor (30) is greater than the first threshold the braking current of the brushless motor (30) is controlled by selecting the field-oriented control (Foc) brake control algorithm according to the received remote-control command,
thus realizing the linear braking control of the remote-controlled cars; if the speed of the current brushless motor (30) is less than or equal to the first threshold, the braking current of the brushless motor (30) is controlled by switching to the braking algorithm based on the PWM control according to the received remote-control command; the first threshold is close to 0;
the transmission system (40) is configured to receive and control the braking torque of the brushless motor (30) on the transmission system (40) according to the braking current;
the motor control module (20) also includes a first brake control module. The first brake control module is configured to select a magnetic Foc brake control algorithm according to the received remote- control command and the braking current of the brushless motor is controlled if the speed of the current brushless motor is greater than the first threshold;
the first brake control module is also used under following conditions: the current throttle value is controlled in the braking command into the reference braking current *Iq* and input it to the current controller; the current controller determines the voltage required to maintain the reference value of the braking current, and outputs the voltages *Vd* and *Vq;* based on the rotor angle information provided by the HALL sensor, the *Valpha* and *Vbeta* in the stator coordinate system are derived from inverse PARK transformation of the voltages *Vd* and *Vq;* Valpha and Vbeta are input to the SVPWM to generate the control signal of the inverter and to control the brushless motor.

5. The device for controlling the linear brakes of remote-controlled model racing cars according to claim 4 is **characterized in that** the motor control module (20) also includes a second brake control module. The second brake control module is configured to switch to the brake algorithm based on PWM control and the braking current of the brushless motor is controlled when the speed of the current brushless motor is less than or equal to the first threshold according to the received remote- control command;
the second brake control module is also used under following conditions: the current throttle value in the braking command is converted into a duty cycle signal of the three lower bridges and input it to the inverter; when the brushless motor (30) has a rotating speed, the permanent magnet of the brushless motor (30) will cut the wire and generate a BEMF in the three phase lines. At this time, the three lower bridges will be connected to form a loop, and the BEMF will generate the braking current in the loop to achieve the braking effect.

6. A linear brake control system is **characterized in that** it is comprised of a device for controlling the linear brakes of remote-controlled model racing cars as stated in any one of claims 4 and 5, and is configured to implement a method for controlling the linear brakes of remote-controlled model racing cars are as stated in any one of claims 1 to 3.

7. A computer-readable storage medium is **characterized in that** at least one instruction is saved in the storage medium, and the at least one instruction is loaded and executed by a processor to realize the steps of a method for controlling the linear brakes of remote-controlled model racing cars as stated in any one of claims 1 to 3.

## Patentansprüche

1. . Verfahren zur Steuerung Linearbremsen von ferngesteuerten Modellrennwagen, wobei das Verfahren einschließt:
S1. der Benutzer sendet den Fernsteuerbefehl über eine Fernsteuerung an das Motorsteuerungsmodul des Modellautos; der Fernsteuerbefehl schließt einen Bremsbefehl ein; der Bremsbefehl einschließt den aktuellen Drosselwert ein;
S2. wenn ein Bremsbefehl von der Fernsteuerung gesendet wird, wählt das Motorsteuerungsmodul gemäß der Drehzahl des aktuellen bürstenlosen Motors einen geeigneten Bremsalgorithmus aus; ist die Drehzahl des aktuellen bürstenlosen Motors größer als der erste Schwellenwert, wählt der Bremssteuerungsalgorithmus gemäß dem empfangenen Fernsteuerbefehl die feldorientierte Regelung (FOC) aus, und der Bremsstrom des bürstenlosen Motors wird gesteuert, wodurch die lineare Bremssteuerung der ferngesteuerten Autos realisiert wird; ist die aktuelle Drehzahl des bürstenlosen Motors kleiner als der erste Schwellenwert, wechselt der Bremsalgorithmus gemäß dem empfangenen Fernsteuerbefehl zur Pulsweitenmodulation (PWM) und der Bremsstrom des bürstenlosen Motors wird gesteuert; der erste Schwellenwert liegt nahe bei 0;
S3. der bürstenlose Motor steuert das Bremsmoment des Bremsübertragungssystems gemäß dem Bremsstrom;
in S2 wird, wenn die Drehzahl des aktuellen bürstenlosen Motors größer als der erste Schwellenwert ist, der magnetische FOC-Bremssteuerungsalgorithmus gemäß dem empfangenen Fernsteuerbefehl ausgewählt, der den Bremsstrom des bürstenlosen Motors steuert. Es besteht aus den folgenden Schritten:
S201. Umwandeln des aktuellen Drosselwerts im Bremsbefehl in den Referenzbremsstrom *Iq* und diesen eingeben in den Stromregler;
S202. der Stromregler ist so ausgebildet, dass er die Spannung bestimmt, die erforderlich ist, um den Referenzbremsstrom aufrechtzuerhalten, sowie die Ausgangsspannungen *Vd* und *Vq* ausgibt;
S203. basierend auf den vom HALL-Sensor bereitgestellten Rotorwinkelinformationen, Ableiten von *Valpha* und *Vbeta* im Stator-Koordinatensystem aus einer inversen PARK-Transformation der Spannungen *Vd* und *Vq*;
S204. Erzeugen des Steuersignals des Wechselrichters und Durchführen der Steuerung von bürstenlosen Motoren, nachdem *Valpha* und *Vbeta* in die Raumvektor-Pulsweitenmodulation (SVPWM) eingegeben wurden.

2. . Verfahren zur Steuerung der Linearbremsen von ferngesteuerten Modellrennwagen gemäß Anspruch 1, **dadurch gekennzeichnet, dass** im Schritt S2, wenn die Drehzahl des aktuellen bürstenlosen Motors kleiner oder gleich dem ersten Schwellenwert ist, der Bremsstrom des bürstenlosen Motors durch Umschalten auf einen Bremsalgorithmus basierend auf der PWM-Regelung gemäß dem empfangenen Fernsteuerbefehl gesteuert wird, einschließlich:
S211. Umwandeln des aktuellen Drosselwerts im Bremsbefehl in das Tastverhältnissignal der drei unteren Brücken und diesen Eingeben in den Wechselrichter;
S212. wenn der bürstenlose Motor eine Drehzahl hat, schneidet der Permanentmagnet des bürstenlosen Motors den Draht und erzeugt eine elektromotorische Gegenkraft (BEMF) in den drei Phasenleitungen.
Zu diesem Zeitpunkt werden die drei unteren Brücken verbunden, um einen Kreis zu bilden, und die BEMF erzeugt den Bremsstrom im Kreis, um die Bremswirkung zu erzielen.

3. . Verfahren zur Steuerung der Linearbremsen von ferngesteuerten Modellrennwagen gemäß Anspruch 1, **dadurch gekennzeichnet, dass** im Schritt S1 der Fernsteuerbefehl auch einen Fahrbefehl einschließt; der Fahrbefehl schließt einen aktuellen Drosselwert ein;
S2 schließt auch Schritte des Motorsteuerungsmoduls ein, das die Ausgangsspannung des Wechselrichters und die Drehzahl des bürstenlosen Motors steuert, indem es den Tastgrad des PWM-Moduls gemäß dem aktuellen Drosselwert anpasst, wenn der Fernsteuerbefehl ein Fahrbefehl ist.

4. . Vorrichtung zur Steuerung der Linearbremsen von ferngesteuerten Modellrennwagen, wobei die Vorrichtung eine Fernsteuerung (10), ein Motorsteuerungsmodul (20), einen bürstenlosen Motor (30) und ein Getriebesystem (40) umfasst;
die Fernsteuerung (10) ist so ausgebildet, dass sie den vom Benutzer gemäß dem Zustand der Modellautos ausgewählten Fernsteuerbefehl empfängt und den Fernsteuerbefehl an das Motorsteuerungsmodul der Modellautos sendet; der Fernsteuerbefehl schließt einen Bremsbefehl ein; ein Bremsbefehl schließt den aktuellen Drosselwert ein;
das Motorsteuerungsmodul (20) ist so ausgebildet, dass es den Motor durch das Empfangen eines Fernsteuerbefehls steuert und geeignete Steuerungsalgorithmen auswählt; wenn ein Bremsbefehl von der Fernsteuerung gesendet wird, wird der geeignete Bremsalgorithmus gemäß der Drehzahl des aktuellen bürstenlosen Motors (30) ausgewählt; wenn die Drehzahl des aktuellen bürstenlosen Motors (30) größer als der erste Schwellenwert ist, wird der Bremsstrom des bürstenlosen Motors (30) durch das Auswählen des feldorientierten Regelungs(FOC)-Bremssteuerungsalgorithmus gemäß dem empfangenen Fernsteuerbefehl gesteuert,
wodurch die lineare Bremssteuerung der ferngesteuerten Autos durchgeführt wird; wenn die Drehzahl des aktuellen bürstenlosen Motors (30) kleiner oder gleich dem ersten Schwellenwert ist, wird der Bremsstrom des bürstenlosen Motors (30) durch Umschalten auf den Bremsalgorithmus basierend auf der PWM-Regelung gemäß dem empfangenen Fernsteuerbefehl gesteuert; der erste Schwellenwert liegt nahe bei 0;
das Getriebesystem (40) ist so ausgebildet, dass es das Bremsmoment des bürstenlosen Motors (30) am Getriebesystem (40) gemäß dem Bremsstrom empfängt und steuert;
das Motorsteuerungsmodul (20) enthält außerdem ein erstes Bremssteuerungsmodul. Das erste Bremssteuerungsmodul ist so ausgebildet, dass es einen magnetischen FOC-Bremssteuerungsalgorithmus gemäß dem empfangenen Fernsteuerbefehl auswählt, und der Bremsstrom des bürstenlosen Motors wird gesteuert, wenn die Drehzahl des aktuellen bürstenlosen Motors größer als der erste Schwellenwert ist;
das erste Bremssteuerungsmodul wird auch unter folgenden Bedingungen verwendet: der aktuelle Drosselwert wird im Bremsbefehl in den Referenzbremsstrom *Iq* gesteuert und in den Stromregler eingegeben; der Stromregler bestimmt die zur Aufrechterhaltung des Referenzwerts des Bremsstroms erforderliche Spannung und gibt die Spannungen *Vd* und *Vq* aus; basierend auf den vom HALL-Sensor bereitgestellten Rotorwinkelinformationen werden *Valpha* und *Vbeta* im Stator-Koordinatensystem durch inverse PARK-Transformation der Spannungen *Vd* und *Vq* abgeleitet; Valpha und Vbeta werden in die SVPWM eingegeben, um das Steuersignal des Wechselrichters zu erzeugen und den bürstenlosen Motor zu steuern.

5. . Vorrichtung zur Steuerung der Linearbremsen von ferngesteuerten Modellrennwagen gemäß Anspruch 4, **dadurch gekennzeichnet, dass** das Motorsteuerungsmodul (20) auch ein zweites Bremssteuerungsmodul einschließt. Das zweite Bremssteuerungsmodul ist so ausgebildet, dass es auf den Bremsalgorithmus basierend auf der PWM-Regelung umschaltet, und der Bremsstrom des bürstenlosen Motors wird gesteuert, wenn die Drehzahl des aktuellen bürstenlosen Motors gemäß dem empfangenen Fernsteuerbefehl kleiner oder gleich dem ersten Schwellenwert ist;
Das zweite Bremssteuerungsmodul wird auch unter folgenden Bedingungen verwendet: Der aktuelle Drosselwert im Bremsbefehl wird in ein Tastverhältnissignal der drei unteren Brücken umgewandelt und in den Wechselrichter eingegeben; wenn der bürstenlose Motor (30) eine Drehzahl hat, schneidet der Permanentmagnet des bürstenlosen Motors (30) den Draht und erzeugt eine BEMF in den drei Phasenleitungen. Zu diesem Zeitpunkt werden die drei unteren Brücken verbunden, um einen Kreis zu bilden, und die BEMF erzeugt den Bremsstrom im Kreis, um die Bremswirkung zu erzielen.

6. . Steuersystem für Linearbremsen, **dadurch gekennzeichnet, dass** es aus einer Vorrichtung zur Steuerung der Linearbremsen von ferngesteuerten Modellrennwagen gemäß einem der Ansprüche 4 und 5 besteht und so ausgebildet ist, dass es ein Verfahren zur Steuerung der Linearbremsen von ferngesteuerten Modellrennwagen gemäß einem der Ansprüche 1 bis 3 implementiert.

7. . Computerlesbares Speichermedium, **dadurch gekennzeichnet, dass** mindestens eine Anweisung im Speichermedium gespeichert ist und die mindestens eine Anweisung von einem Prozessor geladen und ausgeführt wird, um die Schritte eines Verfahrens zur Steuerung der Linearbremsen von ferngesteuerten Modellrennwagen gemäß einem der Ansprüche 1 bis 3 durchzuführen.

## Revendications

1. Procédé de commande de freins linéaires de modèles réduits de voitures de course télécommandées, le procédé comportant les étapes suivantes :
S1. l'utilisateur envoie l'instruction de télécommande au module de commande de moteur du modèle réduit de voiture par le biais d'une télécommande ; l'instruction de télécommande comporte une instruction de freinage ; l'instruction de freinage comporte la valeur de limitation de courant ;
S2. lorsqu'une instruction de freinage est envoyée par la télécommande, le module de commande de moteur sélectionne un algorithme de freinage approprié selon la vitesse du moteur sans balais à courant ; si la vitesse du moteur sans balais à courant est supérieure au premier seuil, l'algorithme de commande de frein sélectionne la commande orientée champ (Foc) selon l'instruction de télécommande reçue et le courant de freinage du moteur sans balais est commandé, réalisant ainsi la commande de freinage linéaire des voitures télécommandées ; si la vitesse de courant du moteur sans balais est inférieure au premier seuil, l'algorithme de freinage passera en commande par modulation d'impulsions en durée (PWM) selon l'instruction de télécommande reçue et le courant de freinage du moteur sans balais est commandé ; le premier seuil est proche de 0 ;
S3. le moteur sans balais commande le couple de freinage du système de transmission de freinage en fonction du courant de freinage ;
à l'étape S2, si la vitesse du moteur sans balais à courant est supérieure au premier seuil, l'algorithme de commande de frein magnétique Foc est sélectionné selon l'instruction de télécommande reçue et commande le courant de freinage du moteur sans balais. Elle comporte les étapes suivantes :
S201. la conversion de la valeur de limitation de courant dans l'instruction de freinage en courant de freinage de référence *Iq*, et son entrée dans le dispositif de commande de courant ;
S202. le dispositif de commande de courant est configuré pour déterminer la tension nécessaire pour maintenir le courant de freinage de référence, et les tensions de sortie *Vd* et *Vq* ;
S203. sur la base des informations d'angle de rotor fournies par le capteur HALL, la dérive de valeurs *Valpha* et *Vbeta* dans le système de coordonnées de stator d'une transformation PARK inverse des tensions *Vd* et *Vq* ;
S204. la génération du signal de commande de l'onduleur et la réalisation de la commande des moteurs sans balais après l'entrée des valeurs *Valpha* et *Vbeta* dans la modulation d'impulsion en durée par vecteur spatial (SVPWM).

2. Procédé de commande des freins linéaires de modèles réduits de voitures de course télécommandées selon la revendication 1, **caractérise en ce qu'**à l'étape S2, si la vitesse du moteur sans balais à courant est inférieure ou égale au premier seuil, le courant de freinage du moteur sans balais est commandé en passant à un algorithme de freinage basé sur la commande PWM selon l'instruction de télécommande reçue, incluant :
S211. la conversion de la valeur de limitation de courant dans l'instruction de freinage en signal de cycle de service des trois ponts inférieurs et son entrée dans l'onduleur ;
S212. lorsque le moteur sans balais a une vitesse de rotation, l'aimant permanent du moteur sans balais coupera le fil et générera une force contre-électromotrice (BEMF) dans les trois lignes de phase.
À ce stade, les trois ponts inférieurs seront connectés pour former une boucle et la BEMF générera le courant de freinage dans la boucle pour obtenir l'effet de freinage.

3. Procédé de commande des freins linéaires de modèles réduits de voitures de course télécommandées selon la revendication 1, **caractérisé en ce qu'**à l'étape S1, l'instruction de télécommande comporte également une instruction d'entraînement ; l'instruction d'entraînement comporte une valeur de limitation de courant ;
l'étape S2 comporte également des étapes dans lesquelles le module de commande de moteur commande la tension de sortie de l'onduleur et la vitesse d'entraînement du moteur sans balais en ajustant le cycle de service du module PWM selon la valeur de limitation de courant lorsque l'instruction de télécommande est une instruction d'entraînement.

4. Dispositif de commande des freins linéaires de modèles réduits de voitures de course télécommandées, le dispositif comportant une télécommande (10), un module de commande de moteur (20), un moteur sans balais (30) et un système de transmission (40) ;
la télécommande (10) est configurée pour recevoir l'instruction de télécommande sélectionnée par l'utilisateur selon l'état des modèles réduits de voitures, et envoyer l'instruction de télécommande au module de commande de moteur des modèles réduits de voitures ; l'instruction de télécommande comporte une instruction de freinage ; une instruction de freinage comporte la valeur de limitation de courant ;
le module de commande de moteur (20) est configuré pour commander le moteur en recevant une instruction de télécommande et en sélectionnant des algorithmes de commande appropriés ; lorsqu'une instruction de freinage est envoyée par la télécommande, l'algorithme de freinage approprié est sélectionné selon la vitesse du moteur sans balais à courant (30) ; si la vitesse du moteur sans balais à courant (30) est supérieure au premier seuil, le courant de freinage du moteur sans balais (30) est commandé en sélectionnant l'algorithme de commande de frein à commande orientée champ (Foc) selon l'instruction de télécommande reçue,
réalisant ainsi la commande de freinage linéaire des voitures télécommandées ; si la vitesse du moteur sans balais à courant (30) est inférieure ou égale au premier seuil, le courant de freinage du moteur sans balais (30) est commandé en passant à l'algorithme de freinage basé sur la commande PWM selon l'instruction de télécommande reçue ; le premier seuil est proche de 0 ;
le système de transmission (40) est configuré pour recevoir et commander le couple de freinage du moteur sans balais (30) sur le système de transmission (40) selon le courant de freinage ;
le module de commande de moteur (20) comporte également un premier module de commande de frein. Le premier module de commande de frein est configuré pour sélectionner un algorithme de commande de frein Foc magnétique selon l'instruction de télécommande reçue et le courant de freinage du moteur sans balais est commandé si la vitesse du moteur sans balais à courant est supérieure au premier seuil ;
le premier module de commande de frein est également utilisé dans les conditions suivantes : la valeur de limitation de courant est commandée dans l'instruction de freinage dans le courant de freinage de référence *Iq* et entrée dans le dispositif de commande de courant ; le dispositif de commande de courant détermine la tension nécessaire pour maintenir la valeur de référence du courant de freinage, et délivre les tensions *Vd* et *Vq* ; sur la base des informations d'angle de rotor fournies par le capteur HALL, les valeurs *Valpha* et *Vbeta* dans le système de coordonnées de stator sont dérivées de la transformation PARK inverse des tensions *Vd* et *Vq* ; les valeurs Valpha et Vbeta sont entrées dans la SVPWM pour générer le signal de commande de l'onduleur et pour commander le moteur sans balais.

5. Dispositif de commande des freins linéaires de modèles réduits de voitures de course télécommandées selon la revendication 4 **caractérisé en ce que** le module de commande de moteur (20) comporte également un deuxième module de commande de frein. Le deuxième module de commande de frein est configuré pour passer à l'algorithme de freinage basé sur la commande PWM et le courant de freinage du moteur sans balais est commandé lorsque la vitesse du moteur sans balais à courant est inférieure ou égale au premier seuil selon l'instruction de télécommande reçue ;
le deuxième module de commande de frein est également utilisé dans les conditions suivantes : la valeur de limitation de courant dans l'instruction de freinage est convertie en signal de cycle de service des trois ponts inférieurs et entrée dans l'onduleur ; lorsque le moteur sans balais (30) a une vitesse de rotation, l'aimant permanent du moteur sans balais (30) coupera le fil et générera une BEMF dans les trois lignes de phase. À ce stade, les trois ponts inférieurs seront connectés pour former une boucle et la BEMF générera le courant de freinage dans la boucle pour obtenir l'effet de freinage.

6. Système de commande de frein linéaire, **caractérisé en ce qu'**il comporte un dispositif de commande des freins linéaires de modèles réduits de voitures de course télécommandées selon l'une quelconque des revendications 4 et 5, et est configuré pour mettre en œuvre un procédé de commande des freins linéaires de modèles réduits de voitures de course télécommandées selon l'une quelconque des revendications 1 à 3.

7. Support de stockage lisible par ordinateur, **caractérisé en ce qu'**au moins une instruction est enregistrée dans le support de stockage, et l'au moins une instruction est chargée et exécutée par un processeur pour réaliser les étapes d'un procédé de commande des freins linéaires de modèles réduits de voitures de course télécommandées selon l'une quelconque des revendications 1 à 3.
